# FASCICULE DE BREVET EUROPEEN

(11) **EP 1 052 905 B1**
(45) Date de publication et mention de la délivrance du brevet: **25.02.2004**
(21) Numéro de dépôt: 99958241.4
(22) Date de dépôt: 03.12.1999
(51) Int. Cl.: A23B 7/154

(54) **PROCEDE ANTI-GERMINATIF DE TUBERCULES OU DE BULBES UTILISANT L'EUGENOL ET/OU L'ISOEUGENOL**
VERFAHREN ZUR KEIMUNGSHEMMENDE BEHANDLUNG VON KNOLLEN UND ZWIEBELN MIT EUGENOL UND/ODER ISOEUGENOL
ANTI-GERMINATING METHOD FOR TUBERS AND BULBS USING EUGENOL AND/OR ISOEUGENOL

(30) Priorité: 03.12.1998 FR 9815305
(43) Date de publication de la demande: 22.11.2000
(73) Titulaire: XEDA INTERNATIONAL, 13670 Saint-Andiol (FR)
(72) Inventeur: BOMPEIX, Gilbert, F-75011 Paris (FR); SARDO, Alberto, F-13160 Châteaurenard (FR)
(74) Mandataire: Bernasconi, Jean Raymond
(86) Numéro de dépôt international: PCT/FR1999/003008
(87) Numéro de publication internationale: WO 2000/032054

(56) Documents cités:
- EP-A- 0 719 499
- EP-A- 0 795 272
- WO-A-92/10934
- WO-A-99/00025
- FR-A- 2 733 393
- US-A- 3 518 096
- US-A- 5 129 951
- US-A- 5 679 351

## Description

L'invention concerne un procédé anti-germinatif de tubercules et de bulbes par application auxdits tubercules et bulbes d'une composition traitante à base d'eugénol ou d'isoeugénol. Ce procédé est notamment approprié au traitement des bulbes d'oignons et des tubercules de pommes de terre.

Après la récolte des pommes de terre ou autres tubercules, celles-ci sont conservées à des températures de l'ordre de 20 à 30° C pendant environ 10 jours afin de durcir leur couche péridermique ou "peau", puis progressivement refroidies jusqu'à leur température de conservation qui est d'environ 10° C, généralement entre 7 et 10° C.

Pendant les premier et deuxième mois suivant leur récolte, les tubercules restent à l'état de repos et présentent peu de tendance à la germination.

Cependant, avant la fin de cette période, les tubercules doivent être traitées chimiquement afin d'inhiber la germination qui serait responsable d'effets néfastes, tels qu'une perte de poids frais, une conservation de l'amidon en surcres et une diminution de la qualité des tubercules ainsi qu'une détérioration de leur apparence.

En outre, les germes ainsi que les tissus avoisinants contiennent des taux élevés de glycoalcaloïdes toxiques qui ne sont pas détruits au cours de la cuisson.

Les procédés de traitement anti-germinatifs les plus utilisés mettent en oeuvre des agents chimiques tels que le chloropopham (CIPC ; 1-méthyléthyl-3-chlorophénylcarbamate). Ces agents chimiques présentent des risques de toxicité élevés pour le consommateur, de sorte que les doses homologuées sont constamment réduites. De ce fait, la recherche s'est essentiellement portée sur la mise au point de produits toujours plus efficaces.

Plus récemment, l'utilisation de terpènes tels que les α- et β-pinènes, le limonène, l'eucalyptol, le safrol, le terpineol et la I-carvone a été proposée dans le traitement anti-germinatif des tubercules et des bulbes : l'avantage de ces terpènes est leur absence de toxicité.

Ainsi, la demande WO 92/10934 concerne un procédé de traitement anti-germinatif consistant à appliquer sur les tubercules des monoterpènes choisis parmi le cinéole, la fenchone, le menthol et leurs mélanges.

Néanmoins, les terpènes étant moins efficaces, que bon nombre de produits de synthèse, la recherche s'est portée sur la mise au point de procédés améliorés pour l'application de ces terpènes sur les tubercules et les bulbes.

Ainsi, la demande FR 94 15 329 prescrit le traitement anti-germinatif de tubercules ou de bulbes, notamment de pommes de terre et oignons, par thermonébulisation d'une composition à base de I-carvone.

La présente demande révèle que, de façon surprenante, une famille réduite de terpènes présente une activité accrue permettant de lutter efficacement contre la germination des tubercules et des bulbes.

L'invention repose sur la découverte de l'efficacité inattendue de deux terpènes dioxygénés qui sont l'eugénol et l'isoeugénol de formules : 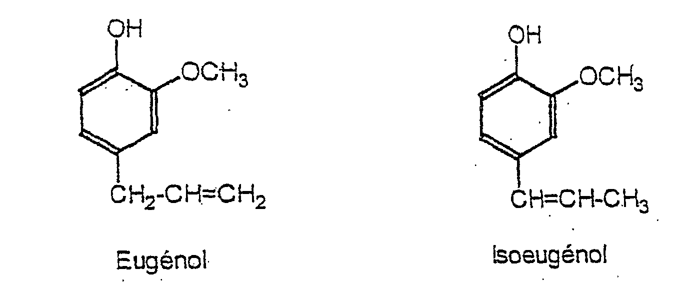 dans la protection des tubercules de pommes de terre et des bulbes d'oignons.

L'invention concerne plus précisément un procédé de traitement anti-germinatif de tubercules et de bulbes comprenant l'application auxdits tubercules et bulbes d'une composition traitante à base d'un principe actif choisi parmi l'eugénol, un sel de l'eugénol acceptable sur le plan alimentaire, l'isoeugénol, un sel de l'isoeugénol acceptable sur le plan alimentaire et leurs mélanges.

Il doit être entendu que la composition traitante peut comporter, en plus du principe actif de type eugénol ou isoeugénol, un autre principe actif inhibant la germination des tubercules et des bulbes.

Le principe actif peut comprendre un sel de l'eugénol ou de l'isoeugénol acceptable sur le plan alimentaire. Des sels particulièrement préférés sont notamment les sels de métaux alcalins tels que les sels de sodium, les sels de lithium et les sels de potassium.

Selon un mode de réalisation particulièrement préféré, le principe actif est l'eugénol, un sel de l'eugénol ou bien un mélange de ceux-ci.

La composition traitante peut être appliquée sur les tubercules et bulbes en utilisant l'une quelconque des méthodes connues dans la technique, et notamment par brossage, par immersion, par aspersion, par atomisation ou par douchage.

Les variantes A et B suivantes sont plus particulièrement préférées.

### Variante A

Selon cette première variante, le procédé de traitement de l'invention comprend les étapes consistant à :
- porter à une température de 40 à 60°C une composition traitante contenant le principe actif dérivé de l'eugénol ou de l'isoeugénol; puis
- appliquer ladite composition traitante sur les tubercules et les bulbes par immersion ou douchage, l'immersion, respectivement le douchage étant poursuivi pendant un temps inférieur ou égal à 10 minutes.

La température à laquelle est chauffée la composition traitante est ajustée en fonction de la nature du produit traité. De fait, il importe de ne pas provoquer la dégradation des tubercules et des bulbes. Seule la surface des tubercules et des bulbes doit être chauffée par mise au contact avec la composition traitante. Selon un mode de réalisation préféré, la surface doit atteindre au moins 35°C, mieux encore au moins 40°C, par exemple entre 45 et 50°C.

De façon générale, on porte la composition traitante à une température comprise entre 40 et 60°C, et on ajuste parallèlement le temps de mise en contact de façon à atteindre la température souhaitée en surface des tubercules et des bulbes.

De manière préférée, la composition traitante est portée entre 45 et 55°C, mieux encore entre 48 et 52°C par exemple 50°C.

Le temps de mise en contact est très court et dans tous les cas inférieur à 10 minutes. Il varie généralement entre 30 secondes et 10 minutes, avantageusement entre 30 secondes et 5 minutes. Un temps de contact de 2 à 3 minutes est le plus souvent suffisant.

Lorsque la durée de traitement par la composition chaude est dépassée, il est mis fin à l'application par tous moyens connus, notamment par simple arrêt de l'aspersion ou du douchage.

Selon une variante avantageuse, le procédé peut comprendre une étape ultérieure consistant à refroidir rapidement les tubercules et les bulbes qui ont été mis au contact de la composition traitante chaude, et ce jusqu'à une température inférieure ou égale à la température ambiante.

Ce refroidissement peut être réalisé par circulation d'air ou par contact avec de l'eau (notamment immersion ou aspersion) dont la température est inférieure ou égale à la température ambiante.

De façon encore plus avantageuse, les tubercules et les bulbes sont préalablement refroidis avant de procéder au traitement à chaud par ladite composition traitante. Le refroidissement doit prendre effet au coeur même des tubercules et des bulbes. Les tubercules et bulbes sont par exemple soumis à un traitement par hydrocooling. Ceci peut être réalisé par douchage avec une composition aqueuse de refroidissement ou bien par immersion dans une composition aqueuse de refroidissement.

La température de la composition aqueuse de refroidissement est généralement comprise entre 0 et 15°C.

La température et le temps de prétraitement par la composition de refroidissement sont ajustés de façon à refroidir la totalité des tubercules et bulbes traités et pas seulement leur couche externe. A titre d'indication, on notera que la température de la composition de refroidissement est inférieure ou égale à la température conventionnelle de stockage préconisée dans la technique.

Selon un mode de réalisation préféré, la composition aqueuse de refroidissement présente une température de 0 à 10°C, mieux encore de 0 à 5-6°C. La durée de pré-traitement par la composition aqueuse de refroidissement est généralement comprise entre 2 minutes et 2 heures, le plus souvent entre 2 minutes et 60 minutes, par exemple entre 4 minutes et 30 minutes.

Cette variante est plus précisément décrite dans les demandes FR 96 03 100 et FR 98 08 995.

### Variante B

Selon cette seconde variante, la composition traitante à base du principe actif de type eugénol ou isoeugénol est appliquée par thermonébulisation.

La thermonébulisation est un procédé consistant à appliquer sur les tubercules et les bulbes un brouillard extrêmement fin (dont les gouttelettes ont une taille de l'ordre du micromètre), lequel est produit par injection d'un liquide dans un courant d'air chaud, qui sert de véhicule à ladite composition traitante. Le brouillard ainsi produit permet un enrobage homogène de chaque tubercule ou bulbe par le principe actif.

La thermonébulisation pourra avantageusement être mise en oeuvre par utilisation d'un appareil de thermonébulisation, tel que décrit dans FR 87 04 960 ou commercialisé sous la dénomination Electrofog Xeda^{R}. Cette machine de thermonébulisation électrique est constituée d'un ventilateur haute pression, d'une résistance électrique et d'une pompe volumétrique garantissant une régularité stricte des caractéristiques du brouillard produit et une introduction très progressive de la composition traitante dans la chambre de stockage.

De manière classique, les conditions permettant d'obtenir une taille de gouttes de 0,5 à 10 microns, notamment de l'ordre du micron, caractéristiques d'un brouillard de thermonébulisation, comprennent le chauffage de l'air à une température de 400 à 650°C avant l'injection du liquide.

Selon l'invention, la température du brouillard à la sortie de l'appareil de thermonébulisation est avantageusement choisie entre 110 et 300°C, de préférence entre 150 et 260°C, par exemple entre 170 et 250°C.

La température de brouillard en sortie du thermonébulisateur est un paramètre de grande importance pour l'efficacité du traitement. Ainsi si la température de brouillard est trop faible, inférieure à 100°C, les particules de liquide sont mal dispersées dans le courant d'air chaud et se rassemblent en gouttelettes de taille trop grosse (plusieurs dizaines de micromètres) et l'enrobage des tubercules ou bulbes n'est pas satisfaisant. Si la température de brouillard est trop élevée, notamment supérieure à 300°C, les gouttelettes sont trop bien dispersées et trop fines (taille inférieure à 1 micromètre) et leur rapport surface/volume très important favorise l'évaporation du liquide à des températures proches du point d'ébullition de la matière active.

Cette variante est plus précisément décrite dans la demande FR 94 15 329.

La thermonébulisation est une méthode d'aspersion particulière. Selon l'invention, toute autre méthode d'aspersion peut être mise en oeuvre.

L'aspersion peut être continue ou intermittente au cours de la durée du stockage.

Lorsque l'aspersion est réalisée de façon répétée dans l'enceinte de stockage, le traitement est avantageusement renouvelé tous les 7 à 40 jours, de préférence 15 à 30 jours.

Selon un mode de réalisation particulièrement préféré, le principe actif est sous forme de sel ou d'un mélange de sels acceptables sur le plan alimentaire. Dans ce cas en effet, on observe une plus faible volatilité du principe actif. De cette façon, la durée de protection des tubercules et bulbes après application de la composition traitante se trouve prolongée.

Selon un mode de réalisation particulier, on ajoute à la composition traitante un ou plusieurs agents réduisant l'évaporation du principe actif. De tels agents sont connus dans la technique.

A titre d'exemple, on peut citer les polyterpènes dispersables dans l'eau; les esters de glycérol de la résine de pin; les gommes laques; les lécithines; les huiles siccatives; l'alcool polyvinylique; la polyvinylpyrrolidone; les polyacrylates de métaux alcalins; et la gomme arabique.

Les polymères de l'isoprène et le caoutchouc naturel sont des polyterpènes utilisables dans le cadre de l'invention.

Les esters de glycérol de la résine de pin sont des esters de l'acide abiétique.

Les gommes laques sont utilisables telles quelles ou sous forme purifiée comme la résine Shellac.

Les lécithines sont des mélanges de combinaisons d'esters des acides oléique, stéarique, palmitique avec l'acide glycérophosphorique et la chloline.

L'alcool polyvinylique, la polyvinylpyrrolidone, les polyacrylates de métaux alcalins et la gomme arabique sont des résines synthétiques hydrosolubles qui fonctionnent également comme agent réduisant l'évaporation du principe actif.

Il doit être entendu cependant que l'invention n'est en aucun cas limitée à l'utilisation de ces résines hydrosolubles spécifiques mais que tout autre type de résine hydrosoluble pourrait également convenir dès lors qu'elle est capable de réduire l'évaporation du principe actif.

Des exemples préférés d'huiles siccatives sont le linoléate de glycérol, l'acide linoléique et l'acide linolénique.

La composition peut contenir en outre des solvants et des tensioactifs variés.

Les tensioactifs préférablement utilisés dans le cadre de l'invention sont des tensioactifs anioniques ou non ioniques.

Des exemples de tensioactifs non-ioniques utilisables selon l'invention sont notamment :
- le produit de condensation d'un alcool gras aliphatique, de préférence en C₈-C₂₂, avec un oxyde d'alkylène en C₂-C₃. L'oxyde d'alkylène en C₂-C₃ peut être l'oxyde d'éthylène, l'oxyde de propylène, ou bien un mélange d'oxyde d'éthylène et d'oxyde de propylène dans des proportions quelconques. Un exemple de tels tensioactifs est le produit de condensation de l'alcool laurylique (ou alcool n-dodécyclique) avec 30 moles d'oxyde d'éthylène;
- le produit de condensation d'un alkylphénol dans lequel la chaîne alkyle est en C₈-C₂₂ avec un oxyde d'alkylène en C₂-C₃. Là encore, les produits de condensation avec l'oxyde d'éthylène, l'oxyde de propylène ou bien un mélange d'oxyde d'éthylène et l'oxyde de propylène dans des proportions quelconques sont également avantageux. A titre d'exemple de tels tensioactifs, on peut citer le produit de condensation du n-nonylphénol avec 10 moles d'oxyde d'éthylène;
- le produit de condensation d'un acide gras de préférence en C₈-C₂₂ avec un oxyde d'alkylène en C₂-C₃, par exemple l'oxyde d'éthylène ou l'oxyde de propylène ou un mélange d'oxyde d'éthylène et d'oxyde de propylène dans des proportions quelconques. Ces produits de condensation présentent une chaîne alkoxylée au niveau de la fonction hydroxyle du groupe carboxylique. Des tensioactifs préférés de ce groupe sont les produits de condensation obtenus à partir de l'acide ricinoléique avec 10 moles d'oxyde d'éthylène.

Des exemples de tensioactifs anioniques utilisables selon l'invention sont notamment :
- les sels hydrosolubles d'alkylsulfates à longue chaîne, et notamment les sels hydrosolubles de (C₈-C₂₄)alkylsufates, tels que les laurylsulfates de métaux alcalins et plus particulièrement le laurylsulfate de sodium; et
- les sels hydrosolubles d'alkylarylsulfonates et notamment les sels hydrosolubles de (C₈-C₂₄)alkyl-(C₆-C₁₀)arylsulfonates, tels que les dodécylbenzènesulfonates de métaux alcalins et plus particulièrement le dodécylbenzènesulfonate de sodium.

L'invention n'est cependant pas limitée à l'utilisation de ces tensioactifs particuliers.

Les solvants pouvant être utilisés dans la composition traitante sont notamment choisis parmi les alcools aliphatiques en C₁-C₁₂, les glycols et les esters alkyliques d'acides carboxyliques.

Plus précisément, les glycols désignent, dans le cadre de l'invention, les alkylèneglycols et les polyalkylèneglycols.

On entend par alkylèneglycol, les alcools dihydroxylés dérivés d'hydrocarbures aliphatiques par remplacement de deux atomes d'hydrogène avec deux groupes hydroxyle. On préfère les (C₂-C₆) alkylèneglycol tels que l'éthylèneglycol et le propylèneglycol.

On entend par polyalkylèneglycol, les composés de formule

HO-(CₚH₂ₚO)ₙ-H

où p et n sont des entiers compris entre 2 et 6.

A titre d'exemple, on peut citer le dipropylèneglycol.

Selon l'invention le groupe CₚH₂ₚO est linéaire ou ramifié. Le polyalkylèneglycol préféré selon l'invention est le dipropylèneglycol.

Les esters alkyliques d'acides carboxyliques préférés sont les esters d'alkyle en (C₁-C₆) d'acide (C₁-C₆)alcanoïque tel que l'acétate de butyle.

La formulation de la composition traitante dépend de la méthode utilisée pour son application sur les tubercules et les bulbes et de la nature des produits traités.

De manière générale, la teneur en chaque ingrédient est calculée de façon à obtenir une solution, aqueuse ou non aqueuse, dispersable dans l'eau.

→ Lorsque la composition traitante est appliquée par thermonébulisation, elle contient de préférence de 15 à 100% en poids dudit principe actif.

Un premier mode de réalisation préféré de l'invention consiste à utiliser une composition traitante comprenant de 80 à 100% en poids de principe actif, mieux encore de 90 à 100% et notamment de 95 à 100%. Dans ce cas particulier de réalisation, le principe actif est l'eugénol, l'isoeugénol ou un mélange de ces composés, la fonction hydroxy de ces composés étant préférablement sous forme libre, et non salifiée.

Un second mode de réalisation préféré consiste à utiliser une composition traitante contenant de 15 à 80% en poids de principe actif, mieux encore de 25 à 60%.

Lorsqu'il est présent, l'agent réduisant l'évaporation représente de 0 à 10% en poids, de préférence entre 1 et 10% en poids, de la composition traitante.

Une composition traitante type (composition préférée a) utilisable en vue d'une thermonébulisation comprend, en pourcentage en poids :
- de 15 à 80% de principe actif;
- de 0 à 10% d'un ou plusieurs agents réduisant l'évaporation;
- de 10 à 85% d'un tensioactif choisi parmi les tensioactifs anioniques, les tensioactifs non ioniques et leurs mélanges; et
- de 0 à 80% d'un solvant choisi parmi l'eau, les (C₁-C₆)alcanols, les (C₂-C₆)alkylèneglycol, les poly(C₂-C₆)alkyléneglycol, les esters (C₁-C₆)alkyliques d'acides (C₁-C₆)alcanoïque et leurs mélanges.

Une autre composition traitante préférée pour thermonébulisation (composition préférée b) comprend en pourcentage en poids :
- de 25 à 60% de principe actif;
- de 1 à 8% d'un ou plusieurs agents réduisant l'évaporation;
- de 25 à 60% d'un tensioactif tel que défini pour a ; et
- de 0 à 30% dudit solvant.

Une autre composition traitante préférée pour thermonébulisation (composition préférée c) comprend en pourcentage en poids :
- de 80 à 100% de principe actif ;
- de 0 à 15% (de préférence de 3 à 15 %) d'un tensioactif tel que défini pour a ;
- de 0 à 15% (de préférence de 3 à 15%) d'un solvant tel que défini ci-dessus pour a, et préférablement choisi parmi un alcanol, un ester d'acide alcanoïque et leurs mélanges.

On notera par ailleurs que le solvant peut comprendre ou être constitué d'une cétone aliphatique, par exemple en C₃-C₁₀

De manière préférée, le tensioactif des compositions a, b et c est un tensioactif non ionique.

L'un des avantages associé à ces compositions est leur forte teneur en principe actif.

Toutefois, bien que cela ne corresponde pas à un mode de réalisation préféré de l'invention, il est possible d'appliquer par thermonébulisation les compositions préférées décrites ci-dessus après leur dispersion ou mise en solution dans de l'eau pour un traitement efficace des fruits et légumes.

→ Lorsque la composition traitante est appliquée par aspersion simple (c'est-à-dire par une méthode d'aspersion différant de la thermonébulisation) ou bien selon le procédé de la variante A, les compositions traitantes préférablement utilisées dans le cadre de l'invention sont obtenues simplement par dispersion ou mise en solution, dans de l'eau, des compositions préférées a et b décrites ci-dessus dans le cadre de la thermonébulisation. Notamment, on obtient des compositions traitantes appropriées par dispersion ou mise en solution, dans de l'eau, des compositions préférées a et b.

De manière générale, lors de la dispersion ou mise en solution dans de l'eau, on ajustera la quantité d'eau ajoutée à la composition de façon à ce que la teneur finale en principe actif de la composition traitante soit comprise entre 500 et 10 000 ppm en poids, mieux encore entre 1000 et 10 000 ppm en poids.

Lorsque la composition est appliquée par aspersion (mais non thermonébulisation), on préfère que l'ensemble du principe actif se trouve sous la forme de sel acceptable sur le plan alimentaire, par exemple sous la forme de sel de métal alcalin (sel d'eugénol, sel d'isoeugénol ou mélange de ces sels). Dans ce cas, la formulation de la composition traitante sera préférablement la suivante:
- 15 à 30% en poids de principe actif;
- 10 à 20% en poids de tensioactif (tensioactifs non ioniques, anioniques ou mélanges de ceux-ci);
- 50 à 80% en poids d'eau.

La composition traitante est préparée de façon conventionnelle en soi par simple mélange de ses constituants.

Lorsque la composition traitante comprend un sel acceptable sur le plan alimentaire, celui-ci peut être introduit dans la composition, lors de sa préparation, sous forme de sel ou bien sous forme neutre; dans cette dernière hypothèse, le sel est formé in situ par addition d'une base appropriée telle qu'un hydoxyde de métal alcalin (soude ou potasse).

La quantité de composition traitante devant être appliquée aux tubercules et bulbes dépend essentiellement de la méthode d'application sélectionnée.

Par thermonébulisation ou aspersion, on appliquera au total sur une période de six mois, de 100 à 200 g de principe actif par tonne de tubercules ou bulbes traités.

Lorsque la variante A décrite ci-dessus est utilisée pour l'application, la quantité résiduelle de principe actif restant sur les tubercules et les bulbes varie généralement après chaque application entre 0,4 et 20 g par tonne de tubercules ou bulbes traités.

Plus généralement, on ajustera la quantité appliquée de principe actif en fonction de la durée de stockage. L'eugénol et l'isoeugénol étant des produits odorants, il est préférable en effet qu'à l'issue du stockage, la majorité du principe actif se soit évaporée et ceci afin de ne pas altérer la valeur commerciale des tubercules et bulbes lors de leur mise sur le marché. La quantité de principe actif devant être appliquée dépend donc de la volatilité du principe actif et de la durée de stockage.

Le procédé de l'invention est particulièrement avantageux dans la mesure où il utilise un principe actif particulièrement efficace comme inhibiteur de la germination des tubercules des pommes de terre et des bulbes d'oignons.

Les variantes de mises en oeuvre spécifiquement décrites ci-dessus sont elles aussi particulièrement intéressantes dans la mesure où elles contribuent à améliorer l'efficacité du principe actif :
- soit en augmentant la pénétration du principe actif dans la couche superficielle des fruits et légumes (c'est le cas de la variante A);
- soit du fait d'une application répétée de la composition traitante sur les fruits et légumes (c'est le cas de la variante B et des méthodes générales d'aspersion);
- soit du fait de l'introduction dans la composition traitante d'agents réduisant la volatilité du principe actif;
- soit du fait de l'utilisation d'un sel acceptable sur le plan alimentaire de l'eugénol et/ou de l'isoeugénol.

L'invention concerne également l'utilisation d'une composition à base d'un principe actif choisi parmi l'eugénol, un sel de l'eugénol acceptable sur le plan alimentaire, l'isoeugénol, un sel de l'isoeugénol acceptable sur le plan alimentaire et leurs mélanges pour le traitement antigerminatif de pommes de terre et d'oignons.

Les exemples suivants illustrent plus avant l'invention.

### Exemple 1

Les formulations 1.1 à 1.6 du tableau 1 ci-dessous sont conformes à l'invention. Elles comprennent toute l'eugénol comme principe actif. Ces formulations sont utilisables dans le procédé de l'invention par dispersion ou mise en solution dans l'eau.

**TABLEAU 1**

| FORMULATION | EUGENOL | EMULSIFIANT | SOLVANT | AGENT REDUISANT L'EVAPORATION |
|---|---|---|---|---|
| 1.1 | 35 | 50 | dipropylène-glycol : 13,5 | polyterpène: 1,5 |
| 1.2 | 55 | 38 | ○ | ester de glycérol de la résine de pin: 7 |
| 1.3 | 40 | 30 | éthanol : 25 | gomme laque: 5 |
| 1.4 | 45 | 30 | acétate de butyle : 20 | lécithine : 5 |
| 1.5 | 50 | 45 | ○ | huile siccative: 5 |
| 1.6 | 40 | 40 | eau : 15 | résine hydrosoluble: 5 |

Dans le tableau 1 sont rapportés les pourcentages en poids des différents constituants.

### Exemple 2

Cet exemple illustre des compositions aqueuses utilisables telles quelles dans le procédé de l'invention. Ces compositions aqueuses contiennent en tant que principe actif l'eugénol sous forme de sel de sodium. Le tableau 2 donne la formulation des compositions 2.1 à 2.3.

**TABLEAU 2**

| EXEMPLE | EMULSIFIANT | EUGENOL | NaOH | eau |
|---|---|---|---|---|
| 2.1 | 0 | 15 | 8 | 77 |
| 2.2 | 15 | 16 | 4 | 65 |
| 2.3 | 0 | 14 | 2,4 | 83,6 |

Dans le tableau 2 sont rapportés les pourcentages en poids des différents constituants.

### EXEMPLE 3

L'efficacité de l'eugénol et de l'isoeugénol dans le traitement antigerminatif de tubercules de pommes de terre a été évaluée et comparée à celle d'autres terpènes.

Les compositions suivantes ont été utilisées dans le cas de l'eucalyptol, de l'eugénol, de l'isoeugénol, du limonène, du safrol et du terpinéol :
- 60% en poids de terpène;
- 7% en poids d'un émulsifiant non-ionique;
- 33% en poids d'acétate de butyle.

Dans le cas de la L-carvone, la composition suivante a été mise en oeuvre :
- 30% en poids de L-carvone;
- 10% en poids d'éthanol;
- 5% en poids d'émulsifiant non-ionique;
- 20% en poids d'eau;
- 35% en poids de propylèneglycol.

Le chlorophénylcarbamate d'isopropyle (CIPC) est un composé utilisé dans la technique comme antigerminatif des tubercules de pommes de terre. Son activité a été comparée à celle de l'eugénol et de l'isoeugénol.

La composition à base de chlorophénylcarbamate d'isopropyle a la formulation suivante :
- 20% en poids de chlorophénylcarbamate d'isopropyle;
- 50% en poids de propylèneglycol;
- 10% en poids d'émulsifiant non ionique;
- 20% d'eau.

Chacune des compositions testées a été appliquée par thermonébulisation. La température en sortie de l'appareil de thermonébulisation était de 240°C sauf dans le cas des compositions à base de L-carvone et de CIPC où elle était de 180°C.

La quantité de composition devant être appliquée est calculée dans chaque cas de façon à obtenir une concentration équivalente de matière active sur les tubercules de pommes de terre.

On a procédé dans cet exemple à des applications répétées en suivant le protocole suivant :
- 45 g/tonne de tubercules en début de stockage;
- 15 g/tonne de tubercules tous les 20 jours;
de telle sorte qu'après 6 mois, 165 g de principe actif ont été appliqués par tonne de tubercules.

Pendant le stockage, les tubercules étaient conservés en chambre froide à une température de 8 à 9°C.

Les résultats obtenus après 5 mois sont rapportés au tableau 1.

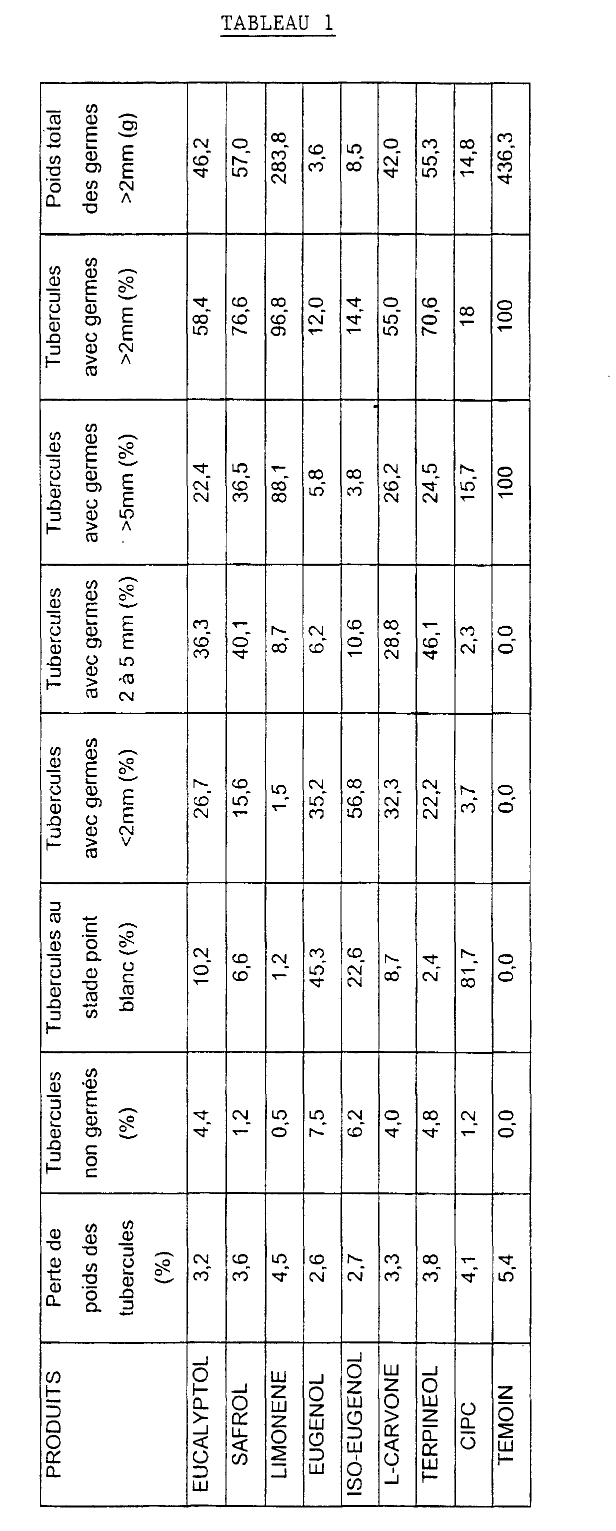

Il résulte clairement du tableau 1 que :
- les pourcentages maximum de tubercules non germés sont obtenus dans le cas de l'eugénol et de l'isoeugénol;
- l'eugénol et l'isoeugénol sont les deux terpènes ayant conduit à un pourcentage très faible de germes d'une taille supérieure à 2 mm.

La supériorité de l'eugénol et de l'isoeugénol ne saurait donc être contestée.

## Revendications

1. Procédé de traitement antigerminatif de bulbes et tubercules comprenant l'application auxdits bulbes et tubercules d'une composition traitante à base d'un principe actif choisi parmi l'eugénol, un sel de l'eugénol acceptable sur le plan alimentaire, l'isoeugénol, un sel de l'isoeugénol acceptable sur le plan alimentaire et leurs mélanges.

2. Procédé de traitement selon la revendication 1, **caractérisé en ce que** le principe actif est l'eugénol, un sel de celui-ci acceptable sur le plan alimentaire ou un mélange de ceux-ci.

3. Procédé de traitement selon la revendication 1 ou 2, **caractérisé en ce qu'**il comprend les étapes consistant à :
- porter la composition traitante à une température de 40 à 60°C,
- soumettre, pendant au plus 10 minutes, lesdits bulbes et tubercules à un. traitement par douchage avec ladite composition traitante ou par immersion dans ladite composition traitante, et ceci avant stockage des bulbes et tubercules.

4. Procédé de traitement selon l'une quelconque des revendications 1 ou 2, **caractérisé en ce que** la composition traitante est appliquée par thermonébulisation sur les bulbes et tubercules, avant stockage desdits tubercules et bulbes.

5. Procédé de traitement selon la revendication 4, **caractérisé en ce que** la température de sortie de l'appareil de thermonébulisation est de 150 à 260°C.

6. Procédé de traitement selon l'une quelconque des revendications 1 ou 2, **caractérisé en ce que** la composition traitante est appliquée par aspersion auxdits bulbes. et tubercules durant la période de conservation des bulbes et tubercules.

7. Procédé de traitement selon l'une quelconque des revendications 4, 5 ou 6, **caractérisé en ce que** la composition traitante est appliquée en continue ou de façon répétée auxdits bulbes et tubercules.

8. Procédé de traitement selon l'une quelconque des revendications précédentes, **caractérisé en ce que** ladite composition comprend un ou plusieurs agents réduisant l'évaporation dudit principe actif.

9. Procédé de traitement selon la revendication 8, **caractérisé en ce que** les agents réduisant l'évaporation sont choisis parmi les polyterpènes dispersables dans l'eau; les esters de glycérol de la résine de pin; les gommes laques; les lécithines; les huiles siccatives; l'alcool polyvinylique; la polyvinylpyrrolidone; les polyacrylates de métaux alcalins; et la gomme arabique.

10. Procédé de traitement selon l'une quelconque des revendications 4 ou 5, **caractérisé en ce que** la composition traitante comprend de 15 à 100% dudit principe actif.

11. Procédé de traitement selon la revendication 10, **caractérisé en ce que** la composition traitante comprend de 80 à 100% en poids dudit principe actif.

12. Procédé de traitement selon la revendication 10, **caractérisé en ce que** la composition traitante comprend, en pourcentage en poids :
- de 25 à 60% dudit principe actif;
- de 1 à 8% d'un ou plusieurs agents réduisant l'évaporation;
- de 25 à 60% d'un tensioactif; et
- de 0 à 30% dudit solvant.

13. Procédé de traitement selon l'une quelconque des revendications 3, et 6 à 7, **caractérisé en ce que** l'on utilise à titre de composition traitante une dispersion dans l'eau de la composition telle que définie à la revendication 12, la teneur en principe actif dans ladite dispersion étant comprise entre 500 et 10 000 ppm en poids.

14. Procédé de traitement selon la revendication 6, **caractérisé en ce que** l'eugénol et l'isoeugénol sont sous la forme de sels de métal alcalin.

15. Procédé de traitement selon la revendication 14, **caractérisé en ce que** la composition traitante comprend, en pourcentage en poids :
- de 15 à 30% dudit principe actif sous forme de sel;
- de 10 à 20% d'un tensioactif choisi parmi les tensioactifs anioniques, les tensioactifs non ioniques et leurs mélanges; et
- de 50 à 80% d'eau.

16. Utilisation d'une composition à base d'un principe actif choisi parmi l'eugénol, un sel de l'eugénol acceptable sur le plan alimentaire, l'isoeugénol, un sel de l'isoeugénol acceptable sur le plan alimentaire et leurs mélanges pour le traitement antigerminatif de pommes de terre et d'oignons, comprenant l'application de ladite composition auxdits pommes de terres et oignons.

## Claims

1. Method of anti-germinating treatment of bulbs and tubers consisting of applying to the said bulbs and tubers a treatment composition based on an active principle chosen from among eugenol, a eugenol salt fit for human consumption, isoeugenol, an isoeugenol salt fit for human consumption and mixtures of them.

2. Method of treatment according to Claim 1, **characterised in that** the active principle is eugenol, a salt of it fit for human consumption or a mixture of these.

3. Method of treatment according to Claim 1 or Claim 2, **characterised in that** it comprises stages consisting of:
- bringing the treatment composition to a temperature of 40 to 60°C;
- subjecting the said bulbs and tubers for 10 minutes at the most to a treatment by showering with the said treatment composition or by immersion in the said treatment composition, and this is done before stocking the bulbs and tubers.

4. Method of treatment according to either one of the Claims 1 or 2, **characterised in that** the treatment composition is applied by thermo-nebulisation on the bulbs and tubers, before stocking the said tubers and bulbs.

5. Method of treatment according to Claim 4, **characterised in that** the temperature at the outlet of the thermo-nebulising equipment is 150 to 260°C.

6. Method of treatment according to either one of the Claims 1 or 2, **characterised in that** the treatment composition is applied by sprinkling the said bulbs and tubers during the period when the bulbs and tubers are kept.

7. Method of treatment according to any one of the Claims 4, 5 or 6, **characterised in that** the treatment composition is applied continuously or repeatedly to the said bulbs and tubers.

8. Method of treatment according to any one of the foregoing claims, **characterised in that** the said composition includes one or more agents which reduce the evaporation of the said active principle.

9. Method of treatment according to Claim 8, **characterised in that** the agents which reduce the evaporation are chosen from among polyterpenes dispersible in water; glycerol esters of pine resin; gum lac; lecithins; drying oils; polyvinyl alcohol; polyvinyl pyrrolidone; polyacrylates of alkaline metals; and gum arabic.

10. Method of treatment according to either one of the Claims 4 or 5, **characterised in that** the treatment composition includes from 15 to 100% of the said active principle.

11. Method of treatment according to Claim 10, **characterised in that** the treatment composition includes 80 to 100% by weight of the said active principle.

12. Method of treatment according to Claim 10, **characterised in that** the treatment composition includes, as percentage by weight:
- from 25 to 60% of the said active principle;
- from 1 to 8% of one or more evaporation-reducing agents;
- from 25 to 60% of a surface tension agent; and
- from 0 to 30% of the said solvent.

13. Method of treatment according to any one of the Claims 3 and 6 to 7, **characterised in that** a dispersion in water of the composition as defined in Claim 12 is used as the treatment composition, the active principle content in the said dispersion being between 500 and 10,000 ppm by weight.

14. Method of treatment according to Claim 6, **characterised in that** the eugenol and isoeugenol are in the form of alkaline metal salts,

15. Method of treatment according to Claim 14, **characterised in that** the treatment composition includes, as percentage by weight:
- from 15 to 30% of the said active principle in the form of salt;
- from 10 to 20% of a surface tension agent chosen from among anionic surface tension agents, non-ionic surface tension agents and mixtures of them; and
- from 50 to 80% of water.

16. Use of an active principle based composition chosen from among eugenol, a eugenol salt fit for human consumption, isoeugenol, an isoeugenol salt fit for human consumption and mixtures of them for the anti-germinating treatment of potatoes and onions, including the application of the said composition to the said potatoes and onions.

## Patentansprüche

1. Verfahren zur Hemmung der Keimbildung von Wurzelknollen und Knollen, umfassend das Aufbringen einer Zusammensetzung auf Basis eines Wirkstoffs, ausgewählt aus Eugenol, einem Eugenolsalz, das für den Lebensmittelbereich geeignet ist, Isoeugenol, einem Isoeugenolsalz, das für den Lebensmittelbereich geeignet ist, und deren Gemischen, auf diese Wurzelknollen und Knollen.

2. Verfahren nach Anspruch 1, **dadurch gekennzeichnet, dass** der Wirkstoff Eugenol oder eines seiner Salze ist, die für Lebensmittelzwecke geeignet sind, oder ein.Gemisch hiervon.

3. Verfahren nach Anspruch 1 oder 2, **dadurch gekennzeichnet, dass** es die Schritte umfaßt, die darin bestehen,
- die Zusammensetzung auf eine Temperatur von 40 bis 60°C zu bringen,
- die Wurzelknollen und Knollen 10 Minuten einer Sprühbehandlung mit dieser Zusammensetzung zu unterwerfen oder sie in diese Zusammensetzung einzutauchen und zwar vor dem Einlagern der Wurzelknollen und Knollen.

4. Verfahren nach einem der Ansprüche 1 oder 2, **dadurch gekennzeichnet, dass** die Zusammensetzung durch wärmeinduziertes Verdampfen auf die Wurzelknollen und Knollen vor dem Einlagern der Wurzelknollen und Knollen aufgebracht wird.

5. Verfahren nach Anspruch 4, **dadurch gekennzeichnet, dass** die Temperatur am Ausgang der Verdampfungsapparatur bei 150 bis 260°C liegt.

6. Verfahren nach einem der Ansprüche 1 oder 2, **dadurch gekennzeichnet, dass** die Zusammensetzung durch Besprengen der Wurzelknollen und Knollen während der Einlagerungsperiode der Wurzelknollen und Knollen aufgebracht wird.

7. Verfahren nach einem der Ansprüche 4, 5 oder 6, **dadurch gekennzeichnet, dass** die Zusammensetzung stetig oder wiederholt auf die Wurzelknollen und Knollen aufgebracht wird.

8. Verfahren nach einem der vorherigen Ansprüche, **dadurch gekennzeichnet, dass** diese Zusammensetzung ein oder mehrere Mittel enthält, die die Verdampfung des Wirkstoffs vermindern.

9. Verfahren nach Anspruch 8, **dadurch gekennzeichnet, dass** die Mittel, die die Verdampfung vermindern, ausgewählt sind aus Polyterpenen, die in Wasser dispergiert werden können, Glycerinestern aus Kiefernharz, Gummilacken, Lecithinen, schnell trocknenden Ölen, Polyvinylalkohol, Polyvinylpyrrolidon, Alkalimetallpolyacrylaten und Gummi arabicum.

10. Verfahren nach einem der Ansprüche 4 oder 5, **dadurch gekennzeichnet, dass** die Zusammensetzung 15 bis 100% Wirkstoff enthält.

11. Verfahren nach Anspruch 10, **dadurch gekennzeichnet, dass** die Zusammensetzung 80 bis 100% Wirkstoff enthält.

12. Verfahren nach Anspruch 10, **dadurch gekennzeichnet, dass** die Zusammensetzung in Gewichtsprozent,
- 25 bis 60% des Wirkstoffs,
- 1 bis 8% von einem oder mehreren verdampfungsverringernden Mitteln,
- 25 bis 60% einer grenzflächenaktiven Substanz,
- 0 bis 30% Lösungsmittel
enthält.

13. Verfahren nach einem der Ansprüche 3, und 6 bis 7, **dadurch gekennzeichnet, dass** man als Zusammensetzung eine Dispersion der Zusammensetzung nach Anspruch 12 verwendet, wobei der Gewichtsgehalt an Wirkstoff zwischen 500 und 10 000 ppm beträgt.

14. Verfahren nach Anspruch 6, **dadurch gekennzeichnet, dass** das Eugenol und isoeugenol in Form ihrer Alkalimetallsalze vorliegen.

15. Verfahren nach Anspruch 14, **dadurch gekennzeichnet, dass** die Zusammensetzung in Gewichtsprozent,
- 15 bis 30% des Wirkstoffs in Form eines Salzes,
- 10 bis 20% einer grenzflächenaktiven Substanz, gewählt aus anionischen grenzflächenaktiven Substanzen, ungeladenen grenzflächenaktiven Substanzen und Gemischen aus ihnen und
- 50 bis 80% Wasser
enthält.

16. Verwendung einer Zusammensetzung auf Basis eines Wirkstoffs, ausgewählt aus Eugenol, einem Eugenolsalz, das für Lebensmittelzwecke geeignet ist, Isoeugenol, einem Isoeugenolsalz, das für Lebensmittelzwecke geeignet ist, und Gemischen hiervon zur Hemmung der Keimbildung von Kartoffeln und Zwiebeln, umfassend das Aufbringen dieser Zusammensetzung auf diese Kartoffeln und Zwiebeln.
